# EUROPÄISCHE PATENTSCHRIFT

(11) **EP 0 127 117 B1**
(45) Veröffentlichungstag und Bekanntmachung des Hinweises auf die Patenterteilung: **25.10.1995**
(21) Anmeldenummer: 84105850.6
(22) Anmeldetag: 22.05.1984
(51) Int. Cl.: H01B 3/34, H01G 4/40

(54) **Stirnkontaktierter elektrischer Wickelkondensator mit mindestens zwei verschaltbaren Einzelkapazitäten und Verfahren zu seiner Herstellung**
Wound capacitor having edge contacts comprising at least two individual capacities, and method of making it
Condensateur enroulé à contacts latéraux comportant au moins deux capacités individuelles et son procédé de fabrication

(30) Priorität: 27.05.1983 DE 3319333
(43) Veröffentlichungstag der Anmeldung: 05.12.1984
(73) Patentinhaber: SIEMENS AKTIENGESELLSCHAFT, 80333 München (DE)
(72) Erfinder: Vetter, Harald, Dipl.-Ing., D-8400 Regensburg (DE)

(56) Entgegenhaltungen:
- GB-A- 2 052 862
- GB-A- 2 089 569
- US-A- 3 892 023

## Beschreibung

### Stirnkontaktierter elektrischer Wickelkondensator mit mindestens zwei verschaltbaren Einzelkapazitäten und Verfahren zu seiner Herstellung

Die Erfindung betrifft einen stirnkontaktierten elektrischen Wickelkondensator mit mindestens zwei verschaltbaren Einzelkapazitäten bei dem die den Einzelkapazitäten entsprechenden Wickelbereiche durch isolierende, über Stirnkontaktschichten aus Zink überstehende Kunststoffolien getrennt sind, wobei die Kunststoffolien aus einem Material bestehen, auf dem Zink nicht haftet, sowie ein Verfahren zu seiner Herstellung.

Aus dem Stand der Technik ist eine große Zahl von Veröffentlichungen bekannt, in denen die Probleme bei der Herstellung von Wickelkondensatoren mit Mehrfachkapazitäten auf unterschiedlichste Weise gelöst werden.

So wird in der GB-A 20 52 862 vorgeschlagen, die Enden der Trennfolien vor dem Herstellen der Stirnkontaktschichten zu verschweißen und gegebenenfalls das Aufsprühen unter einem Winkel vorzunehmen, um Kurzschlüsse zu vermeiden.

Nach der US-A 38 92 023 werden Abdeckmasken aufgesetzt, die nach dem Kontaktieren wieder entfernt werden.

Nach der GB-A 20 89 569, von der der Oberbegriff des Patentanspruchs 1 ausgeht, sind besondere geometrische Anordnungen von metallisierten und metallfreien Zonen bekannt. Dort ist zwar angeführt, daß die Trennfolie vorzugsweise aus einem Material bestehen soll, an dem das Material der Stirnkontaktschicht nicht haftet, jedoch wird dort an der gleichen Stelle als geeignetes Material beispielsweise Polycarbonat genannt, an dem Zink sehr wohl haftet, da bekanntlich Polycarbonat in großem Umfang als Dielektrikumsfolie verwendet wird, wie es auch im Anspruch 7 dieser Druckschrift angeführt ist. Über den Effekt oder die Vorteile dieser Ausführungsform (nicht haftende Stirnkontaktschichten) ist im übrigen in dieser Druckschrift nichts ausgesagt.

Ferner sind aus der DE-A1 25 44 225 Wickelkondensatoren mit zwei Einzelkapazitäten bekannt. Dabei werden metallisierte dielektrische Folien aufgewickelt, wobei zur Trennung der Einzelkapazitäten ein Teil der Metallisierungen entfernt und zur Trennung eine Isolierschicht zwischen den Folien eingesetzt wird. Hierbei tritt die Schwierigkeit auf, daß beim Aufbringen der Stirnkontaktschichten die Isolierschicht ebenfalls beschoopt wird und so eine elektrisch leitfähige Metallbrücke zwischen den Teilkapazitaten herstellt. Beim bekannten Kondensator ist es deshalb erforderlich, daß die Isolierschicht nach dem Beschoopen abgeschnitten wird, so daß die metallische Brücke entfernt wird.

Aufgabe der Erfindung ist es, den elektrischen Wickelkondensator der eingangs genannten Art derart weiterzubilden, daß die genannten Schwierigkeiten umgangen werden.

Diese Aufgabe wird erfindungsgemäß dadurch gelöst, daß die Kunststoffolien aus Polyimid bestehen.

Der Gegenstand der Erfindung weist den Vorteil auf, daß bei dem dem Wickelvorgang nachfolgenden Kontaktierungsprozeß, insbesondere dem Schoop'schen Metallspritzverfahren, die trennenden Kunststoffolien zwar mit Metallpartikeln belegt werden, diese aber problemlos wieder entfernt werden können.

Als besonders vorteilhaft erweist sich eine mechanische Behandlung beispielsweise das Abbürsten mit einer Metallbürste bzw. das Abstrahlen mit einem Reinigungsgranulat, wie beispielsweise das Granulatstrahlen. Weiterhin ist es möglich, durch geeignete Behandlung der trennenden Kunststoffolien z.B. einen Widerstand oder auch eine Induktivität zur angrenzenden Teilkapazität herzustellen.

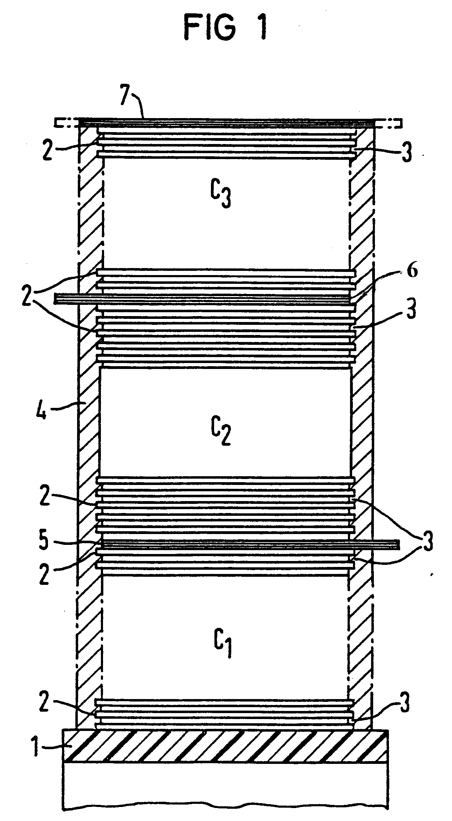

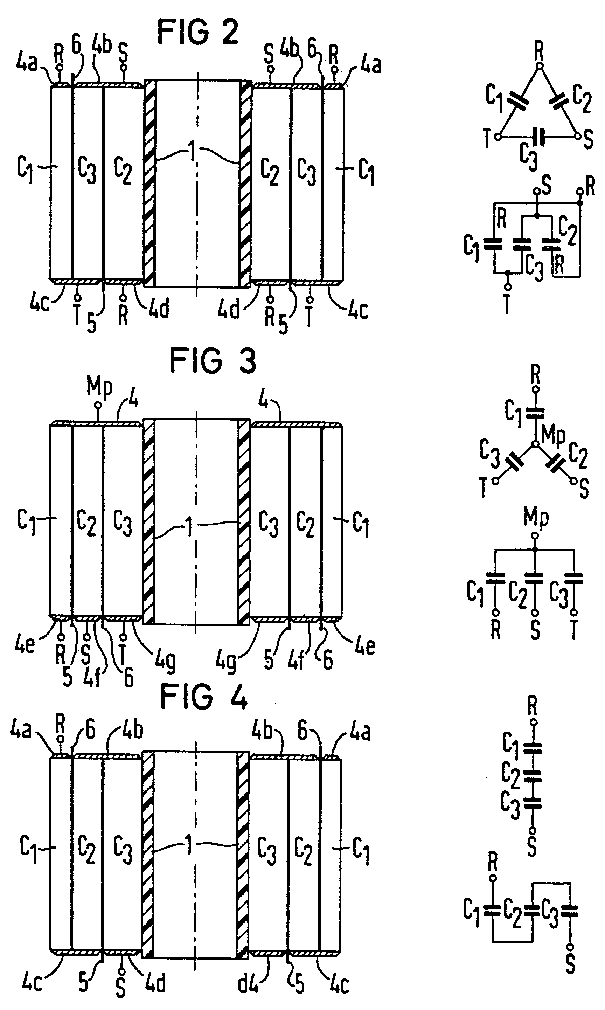

Weitere Vorteile des Gegenstandes der Erfindung werden anhand der folgenden Ausführungsbeispiele näher erläutert. In der dazugehörenden Zeichnung zeigen Figur 1 ein Schnittbild des Kondensatoraufbaus und die Figuren 2 bis 4 die Anordnung der Kapazitäten in Dreieck-, Stern- und Serienschaltung.

In der Fig. 1 ist ein Wickelaufbau dargestellt, bei dem auf einem isolierendem Kernrohr 1 zunächst die einem ersten Kapazitätsbereich C₁ entsprechenden Lagen von Dielektrikumsfolien angeordnet sind. Bei dem in der Fig. 1 dargestellten Ausführungsbeispiel werden dabei beidseitig metallisierte Kunststoffolien 2 verwendet, bei denen die Freiränder der Metallisierungen auf unterschiedlichen Seiten angeordnet sind, beispielsweise auf der Oberseite der Folien zwei 2 und auf der Unterseite der Folien 2 rechts. Zwischen diesen metallisierten Kunststoffolien 2 sind unmetallisierte sog. Stützfolien 3 verwickelt. Diese unmetallisierten Kunststoffolien 3, deren Breite etwas geringer als die der metallisierten Kunststoffolien 2 ist, schaffen zwischen den Stirnbereichen der metallisierten Kunststoffolien 2 Freiräume, wodurch die Stirnkontaktschichten 4 besser mit den Belägen verbunden werden. Die Stützfolien 3 sind ebenfalls dielektrisch wirksam, da sie zwischen zwei Belägen unterschiedlicher Polarität angeordnet sind.

Nachdem der Wickel für die erste Teilkapazität C₁ fertiggestellt ist, wird als Trennlage die Kunststoffolie 5 auf dem Wickelkörper angeordnet.

Darauf folgt der Aufbau der zweiten Teilkapazität C₂ auf der eine weitere Trennlage 6 einer Kunststoffolie angeordnet wird. Auf der dritten Teilkapazität C₃ kann ggf. eine weitere Trennlage 7 als Schutzfolie nach außen angeordnet werden.

Bei dem in der Fig. 1 dargestellten Ausführungsbeispiel bestehen die dielektrisch wirksamen Kunststoffolien 2, 3 aus Polypropylen, wobei die Kunststoffolien 2 mit regenerierfähig dünnen Aluminiumbelägen versehen sind. Als Trennlagen 5, 6 und ggf. 7 werden z.B. drei Windungen einer 25 µm Polyimid-Folie verwendet.

Die Trennlagen 5, 6 stehen um ein definiertes Maß über das Niveau der Stirnkontaktschichten 4 heraus, wobei die beiden Trennlagen zu unterschiedlichen Stirnseiten herausgeführt sind. Die Trennfolien 5, 6 haben eine, unter anderem vom Überstand der Folienkante abhängige Spannungsfestigkeit gegenüber den angrenzenden Teilkapazitäten C₁, C₂ bzw. C₃. Bei 3 mm Überstand der dreilagigen 25 µm-Polyimid-Folie ergab sich eine Spannungsfestigkeit von 1500 V =. Falls nach der mechanischen Behandlung noch Metallreste an den Trennfolien 5, 6 haften, können diese in einem Quasi-Ausheilprozeß durch Anlegen höherer Spannungen abgedampft werden.

Neben dem in der Fig. 1 dargestellten Ausführungsbeispiel können auch einseitig bedampfte Dielektrikumsbänder verwendet werden, die abwechselnd - einmal den Freirand nach rechts und das anderemal den Freirand nach links - auf das Kernrohr aufgewickelt werden.

Die Verwendung einer Stützfolie kann beispielsweise entfallen, wenn die mit den Metallschichten versehenen dielektrischen Kunststoffolien etwas versetzt gegeneinander aufgewickelt werden. Bei einer weiteren Ausführungsform werden Kunststoffolien mit regenerierfähig dünnen Metallschichten und metallfreien Freirändern auf unterschiedlichen Wickelseiten verwendet, wobei die Freiränder vorzugsweise mit einem Wellen- oder Stufenschnitt versehen wird.

Neben den im Ausführungsbeispiel angeführten Dielektrikumsfolien aus Polypropylen lassen sich auch die im Kondensatorbau bekannten anderen dielektrischen Kunststoff- sowie Papierfolien verarbeiten.

Weitere vorteilhafte Ausgestaltungen bestehen darin, daß ein metallisches Kernrohr verwendet wird, das als weiterer Leiter eingesetzt werden kann. In diesem Fall ist allerdings eine zusätzliche Trennfolie zwischen Kernrohr und erstem Wickel erforderlich. Durch Verwendung einer z.B. mit Al und CrNi bedampften Kunststoffolie als Trennfolie, wobei in der gegebenenfalls galvanisch verstärkten Metallschicht beispielsweise durch selektive Ätzung Widerstände und/oder Induktivitäten hergestellt sind, lassen sich in vorteilhafter Weise durch partielle Einkontaktierung Beschaltungen der angrenzenden Teilkapazitäten erreichen.

In der Fig. 2 ist ein Kondensator gemäß der Fig. 1 dargestellt, bei dem die Trennlagen 5, 6 nach unterschiedlichen Wickelstirnseiten herausgeführt sind. Dadurch ergeben sich für die Stirnkontaktschichten auf der einen Seite die Teilbereiche 4a und 4b und auf der anderen Seite die Teilbereiche 4c und 4d. Bei der in der Fig. 2 angedeuteten Verschaltung sind die drei Teilkapazitäten C₁ bis C₃ somit in einer Dreieckschaltung angeordnet.

In der Fig. 3 ist ein weiteres Ausführungsbeispiel dargestellt, bei dem die Trennlagen 5, 6 nach der gleichen Wickelstirnseite herausgeführt sind. Dadurch ergibt sich auf der einen Wickelstirnseite eine durchgehende Stirnkontaktschicht 4 und auf der anderen Seite 3 durch die Trennlagen 5, 6 voneinander getrennte Stirnkontaktschichten 4e, 4f und 4g. Dadurch lassen sich die angegebenen Teilkapazitäten C₁ bis C₃ als Sternschaltung verwenden.

Das Ausführungsbeispiel gemäß Fig. 4 entspricht in Anordnung der Trennlagen 5, 6 und der Stirnkontaktschichten 4a bis 4b dem Ausführungsbeispiel gemäß Fig. 2. Jedoch sind hier nur Anschlüsse an den Stirnkontaktschichten 4a und 4d angeordnet, so daß sich eine Serienschaltung der drei Teilkapazitäten C₁ bis C₃ ergibt.

Neben den in den Ausführungsbeispielen dargestellten Kondensatoren mit drei Teilkapazitäten lassen sich durch Anbringen der entsprechenden Trennfolien auch Kondensatoren mit anderen Mehrfachkapazitäten herstellen und mit entsprechenden Verschaltungen versehen.

## Patentansprüche

1. Stirnkontaktierter elektrischer Wickelkondensator mit mindestens zwei verschaltbaren Einzelkapazitäten, bei dem die den Einzelkapazitäten entsprechenden Wickelbereiche durch isolierende, über Stirnkontaktschichten aus Zink überstehende Kunststoffolien getrennt sind, wobei die Kunststoffolien aus einem Material bestehen, auf dem Zink nicht haftet,
**dadurch gekennzeichnet,** daß die Kunststoffolien (5, 6) aus Polyimid bestehen.

2. Wickelkondensator nach Anspruch 1, **dadurch gekennzeichnet,** daß die Kunststoffolien (5, 6) nach derselben Wickelstirnseite herausgeführt sind.

3. Wickelkondensator nach Anspruch 1, **dadurch gekennzeichnet,** daß die Kunststoffolien (5, 6) abwechselnd zu unterschiedlichen Wickelstirnseiten herausgeführt sind.

4. Wickelkondensator nach einer der Ansprüche 1 bis 3, **dadurch gekennzeichnet,** daß zumindest ein Teil der Kunststoffolie (5, 6) mit einer gemusterten Metallschicht versehen ist.

5. Verfahren zur Herstellung eines stirnkontaktierten elektrischen Wickelkondensators nach einem der Ansprüche 1 bis 4, **dadurch gekennzeichnet,** daß nach Aufbringen der Stirnkontaktschichten (4, 4a, 4b, 4c, 4d, 4e, 4f, 4g) die Kunststoffolien (5, 6) durch eine mechanische Behandlung von den Metallpartikeln befreit werden.

6. Verfahren nach Anspruch 5, **dadurch gekennzeichnet,** daß die Metallpartikel durch Bürsten mit einer Metallbürste entfernt werden.

7. Verfahren nach Anspruch 5, **dadurch gekennzeichnet,** daß die Metallpartikal durch Abstrahlen mit einem Reinigungsgranulat, insbesondere Granulatstrahlen entfernt werden.

8. Verfahren nach einem der Ansprüche 5 bis 7, **dadurch gekennzeichnet,** daß nach der mechanischen Reinigung noch anhaftende Metallpartikel durch Anlegen einer erhöhten Spannung abgedampft werden.

## Claims

1. End-contacted electric wound capacitor having at least two interconnectable individual capacitances, in which the wound regions corresponding to the individual capacitances are separated by insulating plastic films extending beyond end-contact layers of zinc, the plastic films consisting of a material on which zinc does not adhere, characterized in that the plastic films (5, 6) consist of polyimide.

2. Wound capacitor according to Claim 1, characterized in that the plastic films (5, 6) are led out to the same end face of the windings.

3. Wound capacitor according to Claim 1, characterized in that the plastic films (5, 6) are led out alternately to different end faces of the windings.

4. Wound capacitor according to one of Claims 1 to 3, characterized in that at least part of the plastic film (5, 6) is provided with a patterned metal layer.

5. Process for producing an end-contacted electric wound capacitor according to one of Claims 1 to 4, characterized in that, after applying the end-contact layers (4, 4a, 4b, 4c, 4d, 4e, 4f, 4g), the plastic films (5, 6) are freed of the metal particles by a mechanical treatment.

6. Process according to Claim 5, characterized in that the metal particles are removed by brushing with a metal brush.

7. Process according to Claim 5, characterized in that the metal particles are removed by blasting away with cleaning granules, in particular granule jets.

8. Process according to one of Claims 5 to 7, characterized in that, after the mechanical cleaning, still adhering metal particles are evaporated away by applying an increased voltage.

## Revendications

1. Condensateur électrique enroulé à contacts frontaux, comportant au moins deux capacités individuelles pouvant être câblées, dans lequel les zones de bobinage, qui correspondent aux capacités individuelles, sont séparées par des feuilles de matière plastique isolante, qui font saillie à partir de couches des contacts frontaux en zinc, les feuilles de matière plastique étant réalisées en un matériau auquel le zinc n'adhère pas, caractérisé par le fait que les feuilles de matière plastique (5,6) sont réalisées en polyimide.

2. Condensateur enroulé suivant la revendication 1, caractérisé par le fait que les feuilles de matière plastique (5,6) débordent un même côté frontal de l'enroulement.

3. Condensateur enroulé suivant la revendication 1, caractérisé par le fait que les feuilles (5,6) de matière plastique débordent alternativement les côtés frontaux différents de l'enroulement.

4. Condensateur enroulé suivant l'une des revendications 1 à 3, caractérisé par le fait qu'au moins une partie de la feuille de matière plastique (5,6) comporte une couche métallique pourvue de motifs.

5. Procédé pour fabriquer un condensateur électrique enroulé à contacts frontaux, caractérisé en ce qu'après le dépôt des couches de contacts frontaux (4,4a,4b, 4c,4d,4e,4f,4g), on dégage les feuilles de matière plastique (5,6) des particules métalliques, au moyen d'un traitement mécanique.

6. Procédé suivant la revendication 5, caractérisé par le fait qu'on élimine les particules métalliques par brossage à l'aide d'une brosse métallique.

7. Procédé suivant la revendication 5, caractérisé par le fait qu'on élimine les particules métalliques par sablage avec des granulés de nettoyage, notamment des jets de granulés.

8. Procédé suivant l'une des revendications 5 à 7, caractérisé par le fait qu'après le nettoyage mécanique, on élimine par vaporisation des particules métalliques qui adhèrent encore, moyennant l'application d'une tension accrue.
